# EUROPEAN PATENT APPLICATION

(11) **EP 0 761 937 A1**
(43) Date of publication of application: **12.03.1997**
(21) Application number: 95914573.1
(22) Date of filing: 22.02.1995
(51) Int. Cl.: F01N 3/02

(54) **FILTER-VALVE FOR INTERNAL COMBUSTION ENGINES**

(30) Priority: 22.02.1994 MX 9401326
(71) Applicant: Elias Ugalde, Pedro Pioquinto, Guadalaraja, Jalisco, 44100 (MX)
(72) Inventor: Elias Ugalde, Pedro Pioquinto, Guadalaraja, Jalisco, 44100 (MX)
(74) Representative: Füchsle, Klaus, Dipl.-Ing.
(86) International application number: MX9500001
(87) International publication number: WO9523282

(57) **Abstract**

The present invention refers to improvements and claims of a valve filter applicable to any type of internal combustion engine, which combination and means forming said filter enable to filter the combustion vapor in order to direct them to the engine intake manifold, reusing the crude gasoline which could not be combusted and providing enough ventilation to the crankcase to reduce atmospheric pollution. The valve filter of the present invention has a self cleaning system which prevents carbonization returning the lubricant to the crankcase, increasing engine power and performance.

## Description

### TECHNICAL FIELD

The present invention refers to a new type of valve filter to be used on internal combustion engines of the type used by cars and motor vehicles.

### PRIOR ART

There are on the market engine valve filters o several types which present as a common feature the fact that they are highly susceptible to suffer corrosion caused by atmospheric agents of the environment or caused by vapors form the crankcase, being the filters not protected against said vapors. Some of these filters have inside them metallic elements welded to internal pieces, which due to the functioning of the filter may separate or wear out causing an internal or internal maladjustment and malfunctioning; others do not separate gases and solids from the vapors, so these cannot be reused. The filters do not count with an efficient and durable self cleaning system, reducing therefore their useful life and causing unnecessary expenses due to the need to replace them.

Due to the aforementioned, there is the need of an improved valve filter which once and for all solves all the inconvenients and disadvantages mentioned above.

### DISCLOSING OF THE INVENTION

The objective of this invention consists of providing improvements on a valve filter for internal combustion engines, having the filter a simple construction and being easy to install and fully protected against oxidation and/or corrosion, presenting a safer functioning and it must also be long lasting.

Another objective of the present invention is to provide improvements in the crankcase vapors filtering procedure and after filtering the vapors to direct them to the intake manifold to be burned in the combustion chamber; separating oil and gasoline from the vapors so these can be reused.

Additional objectives and advantages of the invention shall be evident form its description, taken together with the figures of the annexed drawings.

### DESCRIPTION OF THE DRAWINGS

With the aim to clearly illustrate the invention, the followings drawings are annexed;

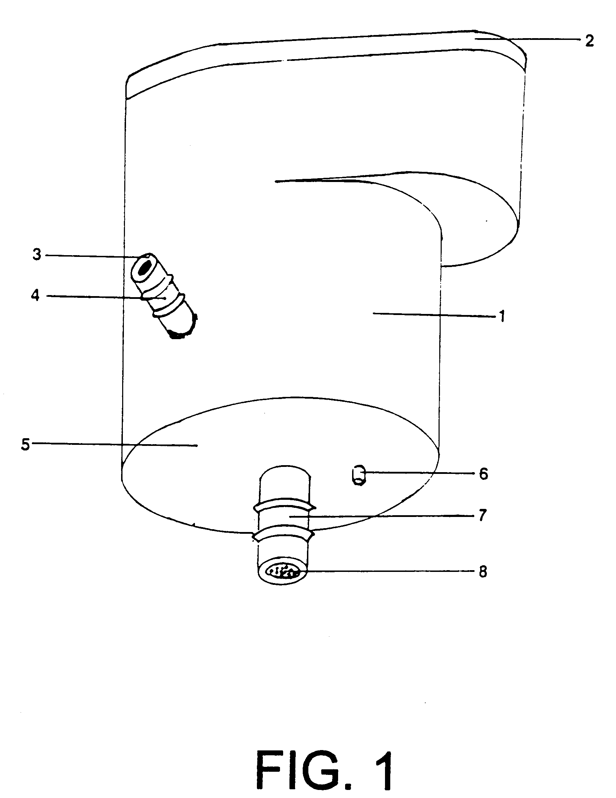

FIGURE 1, is a conventional perspective view of the valve filter.

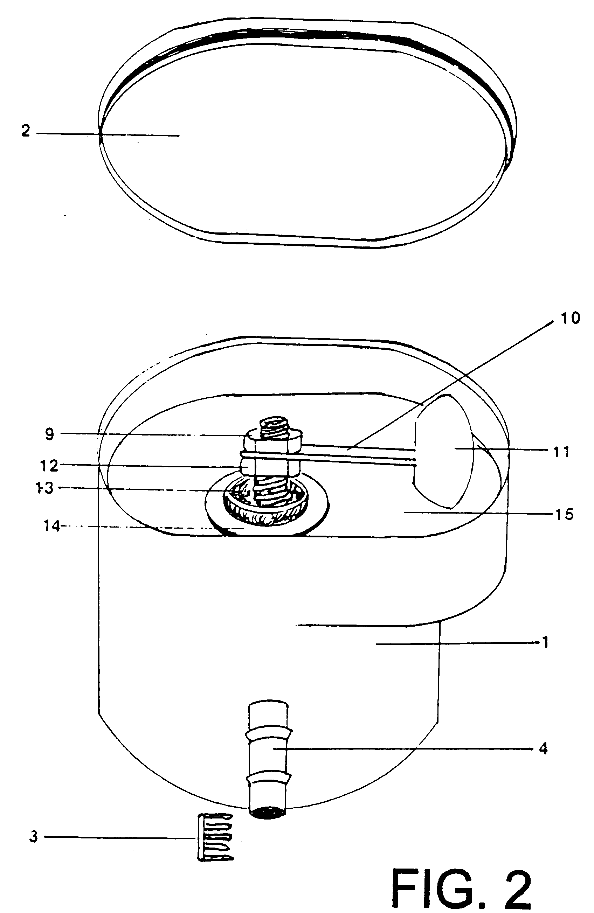

FIGURE 2, is a conventional projection showing the top compartment and the cleaning arrangement which integrate the valve filter of Figure 1.

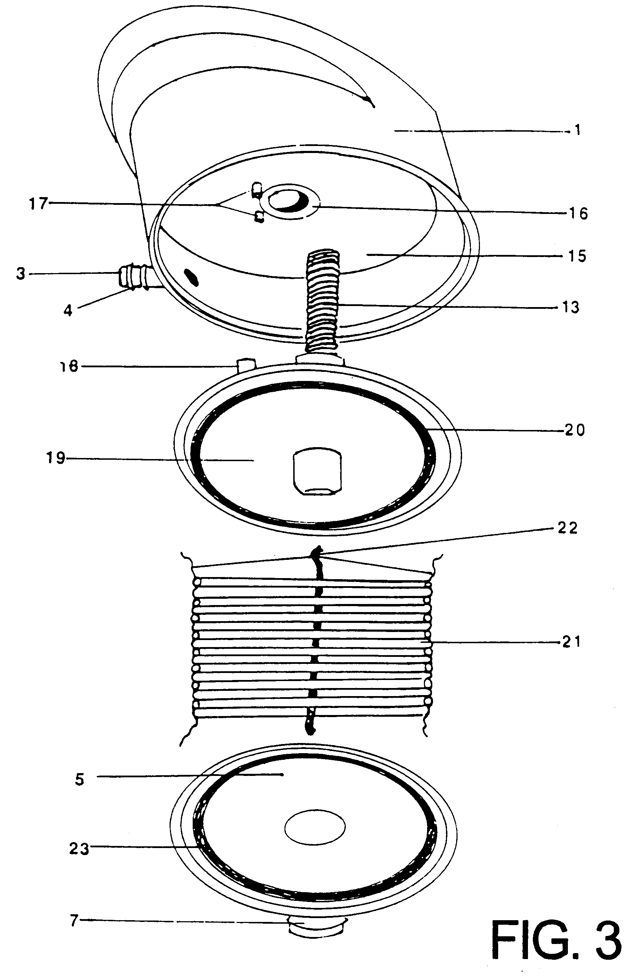

FIGURE 3, is a conventional projection showing the lower compartment and the arrangement of the pieces which integrate the valve filter of figures 1 and 2.

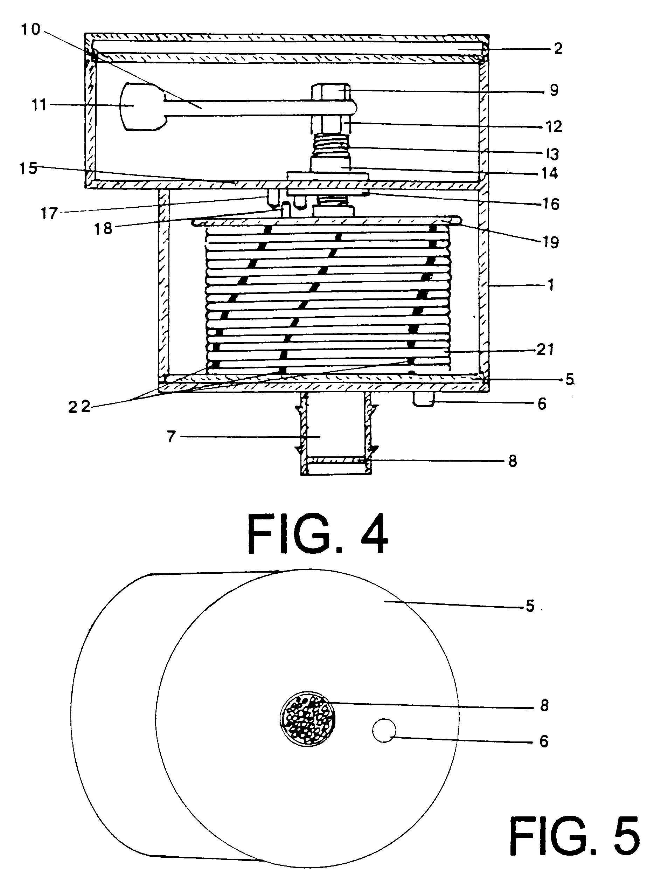

FIGURE 4, is a vertical projection of a complete section of the valve filter presented in FIGURES 1, 2, and 3.
FIGURE 5, is a projected overview of the lower part of the valve filter present in figures 1, 2, 3, and 4.

### BRIEF DESCRIPTION OF THE INVENTION

In accordance with the figures, the best method to carry out the invention is described.

The valve filter consists of a top and a lower compartment, and it is constructed by a combination of cover with an irregular shape made of by a fibers base (1), emerging therefrom, on one side, an outlet conductor with snugs or lips(4), with an air regulator (39) attached, which can present different diameters, depending of the wearing condition of the engine, an intake conductor with snugs of lips (7), positioned at the center of the cover of the lower compartment (5), the cover having an integrated cell (8); the top compartment having a cap (2) and a base (15), which on its center presents two integrated supports (14) and (16). which enable to fix a setscrew (13), which with nuts (9) and (12) supports a short arm (10) which on its end present an anchorage (11) which has an irregular shape or similar to a fan, which by inertia, presents an oscillatory movement, which is controlled by two retention stops (17) integrated on the base (15) on the side of the lower compartment and by a control stop (18) integrated to a main support (19) where a torsion metallic filter (21) is attached, the filter having three inserted vibrating filaments (22); the lower part of said metallic filter being attached the channel (23) of said lower cap (5); said cover (1) and said lids (2) and (5) provide a better protection to the internal pieces of the valve filter preventing oxidation or corrosion, ruptures, maladjustment and malfunctioning.

### FUNCTIONING GO THE INVENTION

Once the valve filter has been positioned on the cylinder head cover, with the direction indicated by the positioning stop (6) which is integrated to said lower cap (5) of said cover (1), the filter starts to function form the time of the start up of the internal combustion engine (not showed), the vapor from the crankcase pass through said inlet conductor with lugs of lips(7) which has an integrated cell, allowing only the entrance of the gases and/or lubricants, filtering the vapors by said torsion metallic filter (21) to let pass the accumulated vapors which are sucked by the intake with the entering air and to make them pass into the manifold to reused the crude gasoline and to allow only filtered air to enter into the engine keeping it clean.

The self cleaning system functions with the vehicle movement, where, by inertia, inside the top compartment, an amphora (11) presents an oscillatory movement supported by said arm (10) , which is fixed to a setscrew (13) by two nuts (9) and (12), the movement of the arm (10) moves the main support (19) which is fixed on the upper part of the filter in the channel (20) of the main support (19), the movement of the arm opens and closes said torsion metallic filter (21) cleaning it automatically with the help of said three vibrating elements (22). This movement of the self cleaning systems prevents carbonization and reduces pollution, since it brings back the solids into the crankcase in order to keep the engine clean, rendering more potency and performance of the engine.

Once having described the invention, it shall be understood that the same is susceptible to suffer changes and modifications, which shall be considered inside the scope of the invention, being only restricted by the claims presented as follows:

## Claims

1. Improvements of a valve-filter for internal combustion engines which consist of an upper and lower compartment, where the improvements consists of the combination of a cover with one outlet conductor with slugs of rims, which has an air regulator attached, a base with two supports, one on the upper compartment and the other on the lower compartment and to retaining stops: an upper and a lower cap, which has a positioning stop, and inlet conductor with lugs or rims, which has cell which only allows the entrance of gases an lubricants vapors; the lower compartment being provided with an torsion metallic filter which has three inserted vibrating elements and which is coupled to the lower cap and to a main support, which has a control stop and a set screw integrated on the center and which arrives to the upper compartment, where two nuts support a short arm which at its free end presents an anchorage with the shape of a fan, wherein the arm makes an oscillatory movement which moves the set screw and the main support, opening and closing the metallic filter with vibrating filaments, and at the same time preventing inadequate movements, since the retention stops are integrated on the base, as well as the supports, forming a single piece with the fibers cover; additionally the main support has also integrated control stop and a channel where the filter is coupled; and its caps protect the pieces which are inside the compartments.

2. Improvements of a valve-filter for internal combustion engines in accordance with claim 1, which consists of a system that bring out the vapor from the crankcase filtering the emissions of carbon dioxide and hydrocarbons, separating the gases and directing them to the intake manifold in order to reuse the crude gasoline which was not utilized; the system has also a self cleaning mechanism driven by oscillatory movement of an arm with an anchorage which opens and closes the filter preventing carbonization and returning oil to the crankcase and providing enough ventilation to reduce pollution, increasing engine power and obtaining a higher fuel efficiency.
